Europäisches Patentamt

European Patent Office

Office européen des brevets

(19)

(11) Veröffentlichungsnummer: **0 261 399 B1**

# (12) EUROPÄISCHE PATENTSCHRIFT

(45) Veröffentlichungstag der Patentschrift: **21.11.91**

(51) Int. Cl.5: **B60G 17/00**

(21) Anmeldenummer: **87112088.7**

(22) Anmeldetag: **20.08.87**

(54) **Fahrzeugfederung.**

(30) Priorität: **19.09.86 DE 3631876**

(43) Veröffentlichungstag der Anmeldung:
**30.03.88 Patentblatt 88/13**

(45) Bekanntmachung des Hinweises auf die
Patenterteilung:
**21.11.91 Patentblatt 91/47**

(84) Benannte Vertragsstaaten:
**DE FR GB IT SE**

(56) Entgegenhaltungen:
**FR-A- 2 562 843**

**PATENT ABSTRACTS OF JAPAN, Band 9, Nr.
38 (M-358)[1761], 19. Februar 1985; & JP - A -
59 179 413 (SANWA SEIKI) 12.10.1984**

**PATENT ABSTRACTS OF JAPAN, Band 10,
Nr. 18 (M-448) [2075], 24. Januar 1986; & JP -
A - 60 176 805 (KAYABA KOGYO) 10.09.1987**

(73) Patentinhaber: **ROBERT BOSCH GMBH
Postfach 50
W-7000 Stuttgart 1(DE)**

(72) Erfinder: **Rubel, Erich, Dipl.-Ing.
Stammheimer Strasse 53
W-7140 Ludwigsburg(DE)**

## Beschreibung

### Stand der Technik

Die Erfindung bezieht sich auf eine Fahrzeugfederung nach der Gattung des Hauptanspruchs. Eine derartige Fahrzeugfederung ist bekannt (DE-A-34 14 257).

Mit einer solchen bekannten Federung wird der Durchgang von einer Stoßdämpferseite zur anderen durch eine Ventileinrichtung überwacht, die elektromagnetisch betätigbar ist. Eine solche semiaktive Federung ist deutlich besser als eine passive Federung.

Eine aktive Federung, wie sie z.B. durch die DE-A-27 38 455 bekannt ist, hat eine Hochdruck-Pumpe, einen Hochdruckspeicher und entsprechende Zumeßventile, und da diese Komponenten alle für sehr hohe Leistungen (bis 5 KW/Rad) ausgelegt werden müssen, ist eine solche Federung sehr teuer und für gewöhnliche Fahrzeuge unwirtschaftlich.

Andererseits ist aber bekannt, daß auf einer sehr guten Straße die Reibung in einer Fahrzeug-Federung überwiegt. Eine aufwendige und teuere Steuerbarkeit eines Dämpfers bringt umso weniger Vorteile, je besser die Straße und je höher die Reibung in der Fahrzeugfederung sind.

### Vorteile der Erfindung

Diese Nachteile werden bei der eingangs genannten Fahrzeugfederung durch die kennzeichnenden Merkmale des Hauptanspruchs vermieden.

### Zeichnung

Ein Ausführungsbeispiel der Erfindung ist in der Zeichnung dargestellt und in der nachfolgenden Beschreibung näher erläutert. Es zeigen Figur 1 eine passive Federung, Figur 2 eine aktive Federung, Figur 3 eine semiaktive Federung, Figur 4 ein Diagramm über Dämpfer-Arbeitsbereiche, und Figur 5 eine erfindungsgemäße Kombination aus aktiver und semiaktiver Federung.

### Beschreibung des Ausführungsbeispieles

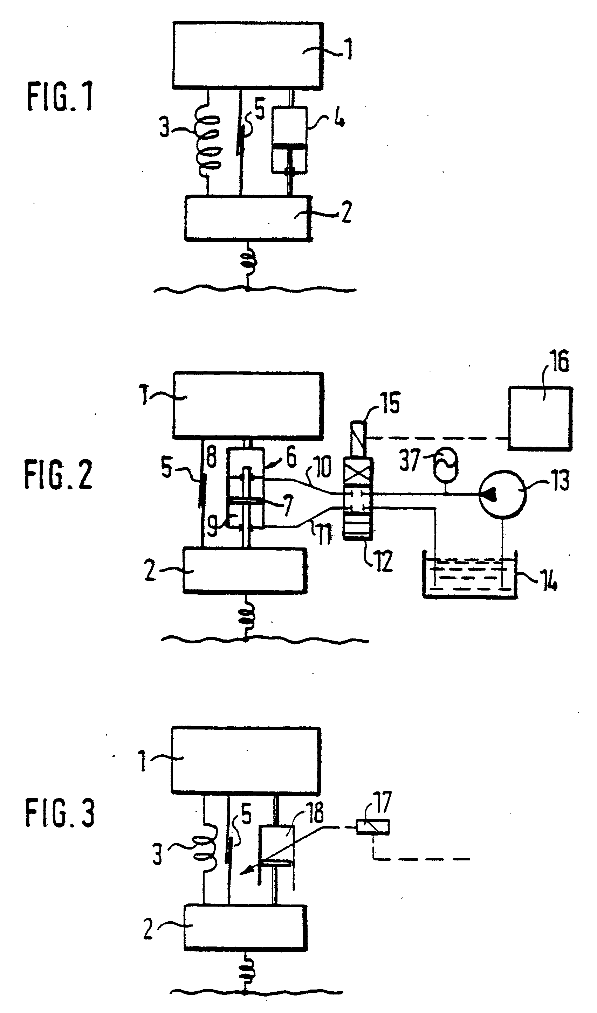

Das in der Figur 1 dargestellte passive Federungssystem hat zwischen einer Fahrzeugmasse 1 und einer Radmasse 2 zur Abfederung des Fahrzeugaufbaus eine Stahlfeder 3 und parallel dazu angeordnet einen gewöhnlichen, ungesteuerten Stoßdämpfer 4. Eine schematisch dargestellte Reibungskomponente ist mit der Bezugszahl 5 versehen.

Die ebenfalls an sich bekannte Federung nach der Figur 2 hat - unter Verwendung der gleichen Bezugszahlen für entsprechende Teile - zwischen Fahrzeugmasse 1 und Radmasse 2 ein Federelement 6 mit einem Kolben 7, der zwei Arbeitsräume 8 und 9 voneinander trennt. Jeder Arbeitsraum 8 bzw. 9 ist über eine Leitung 10 bzw. 11 an ein 4/3-Wege-Magnetventil 12 angeschlossen, das die Verbindung der Arbeitsräume 8 und 9 mit einer Pumpe 13 bzw. mit einem Reservoir 14 überwacht.

Ein Magnet 15 des Magnetventils 12 ist an eine elektronische Steuereinrichtung 16 angeschlossen, der auch Signale von Niveausensoren oder dgl. zugeführt werden, um die Fahrzeugfederung den jeweiligen Fahrzeug- bzw. Straßengegebenheiten anzupassen.

Das 4/3-Wege-Magnetventil riegelt in seiner Mittelstellung die Verbindung der Arbeitsräume 8 und 9 mit der Pumpe 13 bzw. dem Reservoir 14 ab. In seiner zweiten und dritten Stellung stellt es eine solche Verbindung her, einmal eine Pumpenverbindung mit der oberen Arbeitskammer 8 und einmal eine Pumpenverbindung mit der unteren Arbeitskammer 9 jeweils mit umgekehrtem Reservoir-Anschluß.

In der Figur 3 sind - wiederum unter Verwendung der gleichen Bezugszahlen für entsprechende Teile - zwischen der Fahrzeugmasse 1 und der Radmasse 2 ein über einen Magneten 17 steuerbarer Dämpfer 18, eine Stahlfeder 3 und eine Reibungskomponente 5 dargestellt. Eine solche Fahrzeugfederung ist ebenfalls bekannt, sie wird als semiaktiv bezeichnet.

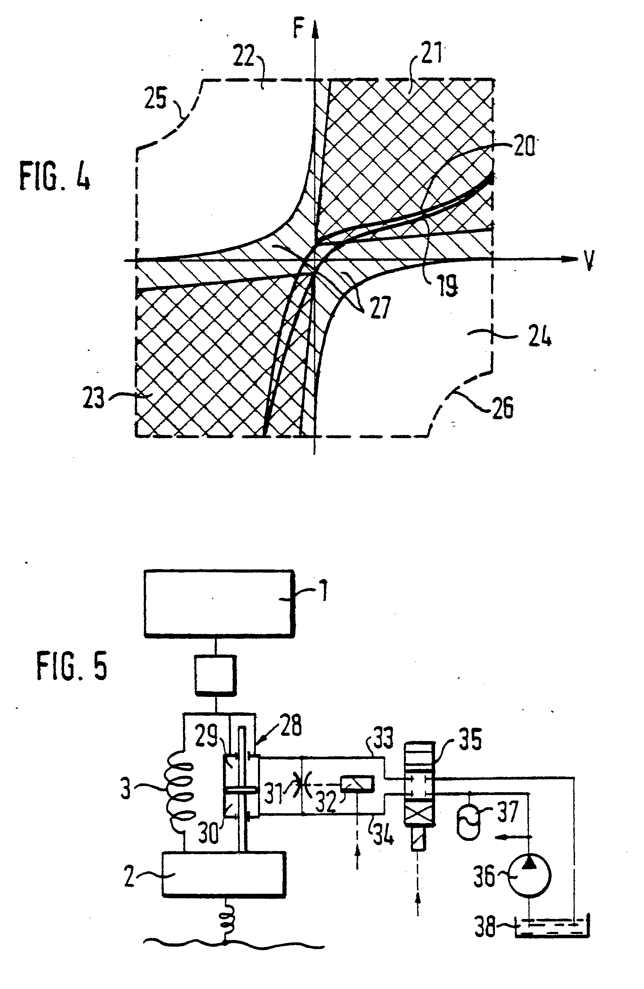

Die Figur 4 zeigt in einem Diagramm, bei dem auf der Ordinaten die Dämpferkraft F und auf der Abszisse die Kolbengeschwindigkeit V aufgetragen ist, die Arbeitsweise eines passiven Serien-Dämpfers entsprechend der Figur 1, dessen Kennlinien mit den Bezugszahlen 19 und 20 bezeichnet sind. In vier Quadranten 21, 22, 23 und 24 arbeitet die ak tive Federung nach der Figur 2 und in den zwei Quadranten 21 und 23 arbeitet die semiaktive Federung nach der Figur 3. An den Kurven 25 und 26 ist zu erkennen, daß die Leistungsfähigkeit der aktiven Federung in den Quadranten 22 und 24 durch die jeweils installierte Pumpenleistung begrenzt ist. Wenn beispielsweise pro Fahrzeugrad eine Leistung von 2 bis 3 kW bereitgestellt werden soll, sind die erforderlichen Komponenten wie Pumpe, Hochdruckspeicher, Leitungen und Magnetventil entsprechend groß, schwer und teuer.

Gemäß der in der Figur 5 dargestellten Erfindung wird eine semiaktive Federung, wie sie in der Figur 3 dargestellt ist, durch eine aktive Federung nach der Figur 2 ergänzt, wobei letztere aber gerade nur so stark ausgelegt ist, daß mit ihr lediglich die Reibungskräfte überwunden werden können. Der Arbeitsbereich 27 ist in der Figur 4 durch eine Einfach-Schrägschraffur dargestellt.

In der Figur 5 sind zwischen der Fahrzeugmasse 1 und der Radmasse 2 die Stahlfeder 3 (Tragfeder) und ein steuerbarer Dämpfer 28 angeordnet. Der Dämpfer 28 ist als ausgeglichener Dämpfer mit gleichen Arbeitsräumen 29 und 30 ausgebildet. Eine steuerbare Drossel 31 ist über einen Magneten 32 betätigbar. Zwei an den Dämpfer 28 angeschlossene Leitungen 33 und 34, eine obere und untere, sind zu einem 4/3-Wege-Magnetvenil 35 geführt und dieses Magnetventil 35 dient zur Überwachung der Verbindung von einer aus Pumpe 36, Speicher 37 und Reservoir 38 bestehenden Druckbeschaffungseinrichtung mit dem Dämpfer 28. Der steuerbare Querschnitt des 4/3-Wege-Magnetventils 35 ist verhältnismäßig klein und zwar so klein, daß die vom Magnetventil 35 gesteuerte Leistung lediglich zur Überwindung der Reibungskräfte in der gesamten Federung ausreicht.

Der Kern und der Vorteil der vorliegenden Erfindung bestehen nun also darin, daß zur Kompensation des nur einige Prozent betragenden Anteils der Reibkraft an der Gesamtkraft eine installierte Pumpen-Leistung von nur 50 bis 100 W pro Fahrzeugrad genügt. Die zur Installation einer solch geringen Leistung erforderlichen Komponenten sind im Vergleich zu einer aktiven Federung kleiner und leichter und erheblich preiswerter. Während die sehr hohen Anforderungen an die Schnelligkeit des 4/3-Wege-Magnetvetils 12 bei der aktiven Federung nach Figur 2 sehr viele Probleme aufwerfen, lassen sich die Dynamik-Forderungen an das kleine, nur einen geringen Strombedarf aufweisende und nur der Reibungskompensation dienende 4/3-Wege-Magnetventil 35 sehr leicht erfüllen.

Bei sehr kleinen Kolbengeschwindigkeiten im Dämpfer 28 arbeitet die Federung nach der Figur 5 wie eine aktive Federung mit all ihren Vorteilen besonders auf guter Fahrbahn. Bei größeren Kolbengeschwindigkeiten, die zu Kräften über der Reibkraftgrenze führen, arbeitet die Federung nach der Figur 5 wie eine semiaktive Federung.

Die in der Figur 5 dargestellte getrennte Bauweise von Dämpferventil (Drossel 31 und Magnet 32) und 4/3-Wege-Magnetvenitl 35 kann auch durch eine zu einem Block zusammengefügte Bauweise ersetzt werden.

## Patentansprüche

1. Fahrzeugfederung für Kraftfahrzeuge mit einem Stoßdämpfer, der als semiaktive Federung ausgelegt ist, indem seine Dämpferkonstante durch ein elektrisches Signal mit Hilfe eines Magnetventils veränderbar ist, dadurch gekennzeichnet, daß die semiaktive Federung (Figur 3) ergänzt ist durch eine zur Energieversorgung mit Pumpe (13, 36) und Speicher (37) ausgerüstete aktive Federung (Figur 2), deren Leistung jedoch nur für eine Überwindung von Reibungskräften in der Federung, insbesondere im Dämpfer (28) ausgelegt ist.

2. Fahrzeugfederung nach Anspruch 1, dadurch gekennzeichnet, daß zur Steuerung des Dämpfers (28) ein 4/3-Wegeventil (35) verwendet ist, dessen steuerbarer Querschnitt so klein gehalten ist, daß die gesteuerte Leistung lediglich zur Überwindung der Reibungskräfte in der gesamte Federung ausreicht.

3. Fahrzeugfederung nach Anspruch 1 oder 2, dadurch gekennzeichnet, daß das Magnetventil (Drossel 31, Magnet 32) zur Veränderung der Dämpferkonstante und das 4/3-Wege-Magnetventil (35) zur Steuerung der Energieversorgung zu einem gemeinsamen Ventilblock zusammengefaßt sind.

## Claims

1. Vehicle suspension for motor vehicles with a shock absorber which is designed as a semi-active suspension; its dampening rate being alterable by means of an electric signal with the aid of a solenoid valve, characterised in that the semi-active suspension (Figure 3) is complemented by an active suspension (Figure 2) which is equipped with a pump (13, 36) and an accumulator (37) for the purpose of energy supply but the power of which is designed only for overcoming frictional forces in the suspension, in particular in the shock absorber (28).

2. Vehicle suspension according to Claim 1, characterised in that, to control the shock absorber (28), a 4/3-way valve (35) is used, the controllable crosssection of which is kept so small that the controlled power is sufficient merely for overcoming the frictional forces in the suspension as a whole.

3. Vehicle suspension according to Claim 1 or 2, characterised in that the solenoid valve (restrictor 31, magnet 32) for altering the dampening rate and the 4/3-way solenoid valve (35) for controlling the energy supply are combined to form a common valve block.

## Revendications

1. Suspension de véhicule automobile comportant un amortisseur conçu comme suspension semi-active et dont la constante d'amortissement peut être modifiée a l'aide d'une électrovanne, par un signal électrique, caractérisée en ce que la suspension semi-active (figure 3) est complétée par une suspension active (figure 2) munie d'une pompe (13, 36) et d'un accumulateur (37) pour l'alimentation en énergie, dont la puissance n'est toutefois dimensionnée que pour vaincre les forces de frottement dans la suspension notamment dans l'amortisseur (28).

2. Suspension de véhicule selon la revendication 1 caractérisée en ce qu'elle comprend une électrovanne à 4/3 voies (35) pour commander l'amortisseur (28), vanne dont la section commandée est suffisamment petite pour que la puissance commandée Buffise uniquement pour vaincre les forces de frottement dans l'ensemble de la suspension.

3. Suspension de véhicule selon la revendication 1 ou 2 caractérisée en ce que pour modifier la constante d'amortissement, l'électrovanne, (organe d'étranglement 31, électro-aimant 32), ainsi que l'électrovanne (35) à 4/3 voies, qui commande l'alimentation en énergie, sont réunies en un seul bloc vanne.

FIG.1

FIG.2

FIG.3

FIG. 4

FIG. 5